# EUROPÄISCHE PATENTSCHRIFT

(11) **EP 0 338 103 B1**
(45) Veröffentlichungstag und Bekanntmachung des Hinweises auf die Patenterteilung: **13.04.1994**
(21) Anmeldenummer: 88106206.1
(22) Anmeldetag: 19.04.1988
(51) Int. Cl.: C10L 10/00, B01D 53/34

(54) **Verfahren zum Vermindern der Schadstoffemissionen beim Betrieb von Kohleverbrennungseinrichtungen**
Process for diminishing harmful emissions when operating coal combustion plants
Procédé pour diminuer les émissions nocives produites en exploitant des installations de combustion de charbon

(43) Veröffentlichungstag der Anmeldung: 25.10.1989
(73) Patentinhaber: Emmerichs, Gerhard, Dipl.-Ing., D-82110 Germering (DE)
(72) Erfinder: Emmerichs, Gerhard, Dipl.-Ing., D-82110 Germering (DE)
(74) Vertreter: Brauns, Hans-Adolf, Dr. rer. nat.

(56) Entgegenhaltungen:
- EP-A- 0 156 784
- DE-C- 3 330 843
- FR-A- 1 097 969
- FR-A- 2 104 393

## Beschreibung

Die Erfindung betrifft ein Verfahren zum Vermindern der Schadstoffemissionen beim Betrieb von Kohleverbrennungseinrichtungen.

Unter Kohleverbrennungseinrichtungen werden alle solchen Einrichtungen verstanden, bei denen Braunkohle oder Steinkohle in einer Verbrennungsanlage verbrannt werden.

Beim Betrieb von Großfeuerungsanlagen sind die mit den Verbrennungsgasen an die Umwelt abgegebenen Emissionswerte von erheblicher Bedeutung. Die Verbrennungsgase enthalten insbesondere SO₂ und NOₓ. Der Schaden, der durch die Emission angerichtet wird, ist außerordentlich groß, und es bestehen gesetzliche Vorschriften, durch welche die zulässigen Schadstoffemissionswerte bei Verbrennungsanlagen festgelegt werden.

Zur Verminderung der Schadstoffemission hat man bereits Gaswäscher und Staubfilter eingesetzt. Die Ergebnisse sind jedoch noch nicht befriedigend. Außerdem ist der Aufwand erheblich, unabhängig davon, ob man bestehende Verbrennungsanlagen umrüstet oder neue Verbrennungsanlagen von vornherein mit entsprechenden Wasch- und Filtereinrichtungen ausrüstet.

In der DE-A-33 30 843 wird ein Verfahren zum Vermindern der Schadstoffemission beim Betrieb von Verbrennungseinrichtungen, bei denen fossile Brennstoffe in Gegenwart von Zusatzstoffen verbrannt werden, beschrieben. Bei dem bekannten Verfahren gibt man vor der Einführung des Verbrennungsgutes in die Verbrennungsanlage dem Verbrennungsgut
a) Spezialkalk T, enthaltend Calciumcarbonat und hexagonalen Kohlenstoff sowie
b) Rückstandsprodukte aus der Zuckerindustrie, ausgewählt aus
   i) syrupartiger Melasse und/oder
   ii) Festsubstanz aus der Rübenreinigung und/oder
   iii) Carboschlamm aus der Zuckerfertigung
zu, vermischt das Verbrennungsgut mit den Zusatzstoffen gründlich und führt diese Mischung in den Verbrennungsraum bei einer Temperatur von 850 bis 950°C ein. Außerdem werden hinter dem Feuerungsraum die Verbrennungsgase bei einer Temperatur von 300 bis 650°C mit den gleichen Zusatzstoffen gemäß a) und b) kontaktiert.

Aufgabe der Erfindung ist es, bei einem Verfahren, bei dem Kohle in Verbrennungseinrichtungen mit den vorgenannten Zusatzstoffen a) und b) verbrannt werden, weitere wesentliche Verbesserungen zur Verminderung der Schadstoffemission zu erzielen. Diese Aufgabe wird durch ein Verfahren zum Vermindern der Schadstoffemissionen beim Betrieb von Kohleverbrennungseinrichtungen, bei dem man vor der Verbrennung der Kohle folgende Substanzen zuführt:
a) Spezialkalk T, enthaltend Calciumcarbonat und hexagonalen Kohlenstoff sowie
b) Rückstandsprodukte aus der Zuckerindustrie, ausgewählt aus
   i) syrupartiger Melasse und/oder
   ii) Festsubstanz aus der Rübenreinigung und/oder
   iii) Carboschlamm aus der Zuckerfertigung,
und die Mischung aus der Kohle und den Zusatzstoffen gemäß a) und b) verbrennt, das dadurch gekennzeichnet ist, daß man in Kombination folgende Verfahrensschritte durchführt:
A. Mischen der Kohle mit den Zusatzstoffen gemäß a) und b) unter Zusatz von
   c) Ton;
B. gegebenenfalls Bunkern der gemäß A erhaltenen Mischung mit einem Feuchtigkeitsgehalt von 10 bis 25%;
C. Mahlen der Mischung gemäß A auf eine Korngröße von 25 bis 500 µm;
D. Einblasen oder Fördern der gemäß C erhaltenen Mischung in einen unteren Feuerungsraum eines Verbrennungsofens;
E. Einblasen der Zuschläge aus a), b) und c) zusammen mit 10 bis 25 Volumen-% rückgeführtem Verbrennungsgas in die obere Verbrennungszone des Verbrennungsofens;
F. Zugabe des Additivs aus a), b) und c), jedoch ohne die Komponente ii), und von d) Natriumbicarbonat zu dem nach Wärmeaustausch abgekühlten Verbrennungsgas; und
G. Leiten des Verbrennungsgases über ein Trockenfilter gelöst.

Die Komponenten, die bei der vorliegenden Erfindung als Zuschlagstoffe für die Verbrennung der Kohle verwendet werden, sind die folgenden:
Spezialkalk T, enthaltend Carciumcarbonat und hexagonalen Kohlenstoff. Dieser graphithaltige Spezialkalk fällt z.B. bei der Kalk-Stickstoff-Herstellung in großen Mengen an und wurde bisher auf die Halde geworfen;
die Rückstandsprodukte aus der Zuckerindustrie sind:
i) syrupartige Melasse und/oder
ii) Festsubstanz aus der Rübenreinigung und/oder
iii) Carboschlamm aus der Zuckerfertigung.

Die aus der Zuckerindustrie stammenden Rückstandsprodukte können somit einzeln oder in Kombination verwendet werden. Die Komponente ii), also die Festsubstanz aus der Rübenreinigung, findet jedoch als Zuschlagstoff nur am Anfang des Verfahrens, beim Abmischen der Kohle und vor dem Mahlen der Mischung, Verwendung.

Die Komponente iii) enthält bis zu 80 Gew.% schadstoffbindende Kalkanteile.

Die in der Zuckerindustrie anfallenden Stoffe waren bisher Abfallstoffe, die man nur schlecht oder gar nicht verwenden konnte.

Nachfolgend wird das beanspruchte Verfahren näher beschrieben:
In der Stufe A. erfolgt das Vermischen der Kohle mit den Zusatzstoffen gemäß a) und b). Dieses Vermischen erfolgt in üblichen Mischanlagen, z.B. Zwangsmischern, Zementmischern oder Mischen im Verblasverfahren.

Die Mengen an a), b) und c), die mit der Kohle vermischt werden, hängen von der Menge der bei der Verbrennung entstehenden Schadstoffe ab. Dies kann durch einen Vorversuch in einfacher Weise ermittelt werden. Die Komponente a) wird vorzugsweise in einer solchen Menge zugemischt, daß sie für eine 2 bis 3-fache stöchiometrische Umsetzung mit den bei der Verbrennung der Kohle entstehenden Schadstoffen in der Kohle ausreicht. Hierfür soll also vorzugsweise mindestens die 3-fache Menge an Calciumcarbonat, bezogen auf Schwefel und Halogene, in der Kohle vorliegen. Die entsprechende Menge kann durch eine einfache, in der Praxis ohnehin immer vorzunehmende Analyse der zu verbrennenden Kohle vorher bestimmt werden.

Das Verhältnis der Komponenten a), b) und c) zueinander kann in einem weiten Bereich schwanken. Es kann beispielsweise bei a) 30 bis 60 Gew.%, vorzugsweise 40 Gew.%, b) 40 bis 70 Gew.%, vorzugsweise 50 Gew.% und c) 5 bis 20 Gew.%, vorzugsweise 10 Gew.%, in Abhängigkeit von den bei der Verbrennung der Kohle entstehenden Schadstoffen, liegen. Auf 1000 Gew.-Teile Kohle werden, in Abhängigkeit von den in der Kohle enthaltenen Verunreinigungen, vorzugsweise
von a) 20 bis 60 Gew.-Teile,
von b) 20 bis 60 Gew.-Teile,
von c) 5 bis 25 Gew.-Teile, und
von d) 10 bis 30 Gew.-Teile
angewendet.

Als Kohle kommt Braunkohle oder Steinkohle, die gegebenenfalls vorher vergütet wurde, in Frage.

Nach dem Vermischen gemäß der Stufe A kann die so erhaltene Mischung in einem Brennstoffbunker zwischengelagert werden. Diese Zwischenlagerungsstufe B ist nicht unbedingt erforderlich, jedoch ist sie häufig zweckmäßig, und zwar insbesondere dann, wenn die Ausgangskomponenten keinen ausreichenden Feuchtigkeitsgehalt haben. Denn die der Stufe C zugeführte Mischung soll zweckmäßig einen Feuchtigkeitsgehalt zwischen etwa 10 bis 25% aufweisen, weil beim Mahlen gemäß der Stufe C bei der damit verbundenen Wärme schon eine Vorreaktion zwischen den Zuschlagstoffen mit den Verunreinigungen in der Kohle abläuft. In der Regel kann man aber davon ausgehen, daß die Kohle und/oder die Zusatzstoffe a), b) und c) von vornherein eine ausreichende Feuchtigkeit aufweisen, die im Bereich von 10 bis 25%, bezogen auf das Gewicht der Mischung gemäß A, liegt.

Die gemäß A erhaltene Mischung, die gemäß B in einem Bunker zwischengelagert wurde, wird dann entweder direkt hinter dem Mischer oder von dem Bunker zu einer Mühle gefördert. In dieser Mühle erfolgt gemäß der Stufe C das Mahlen der Mischung auf eine Korngröße von 25 bis 500 und vorzugsweise 100 bis 200 µm. Als Mahleinrichtung kommen die üblichen, in der Technik für solche Zwecke verwendeten Mühlen in Frage, insbesondere Schlagmühlen. Wie schon dargelegt, entsteht bei dem Mahlvorgang Wärme und dadurch findet bereits eine Reaktion der Verunreinigungen in der Kohle mit den Zuschlagstoffen statt.

Von der Mühle wird die nun zerkleinerte Mischung in den Verbrennungskessel eingeführt, und zwar in den unteren Feuerungsraum. Der untere Feuerungsraum ist der Herd, in dem die Verbrennung in dem Verbrennungskessel abläuft. Das Einführen der gemahlenen Mischung erfolgt durch Einblasen, z.B. durch pneumatische Förderung oder durch Aufgeben mittels eines Förderbandes.

Die Temperatur im unteren Feuerungsraum liegt zwischen etwa 850 und 1150°C. Bei dieser Verbrennung werden schon etwa 75% des Schwefels gebunden.

Gemäß der Stufe E ist vorgesehen, daß 10 bis 25 Vol.%, vorzugsweise 10 bis 15 Vol.%, der Verbrennungsgase rückgeführt und zusammen mit den Zuschlägen aus a), b) und c) in die obere Verbrennungszone eingeblasen werden. Als obere Verbrennungszone wird hierbei die Flammzone, die etwa das obere Drittel des Verbrennungskessels ausmacht, angesehen.

Die aus dem Kessel austretenden Verbrennungsgase werden einem Wärmetauscher zugeführt, in welchem sie auf eine noch reaktionsfähige Temperatur, die beispielsweise 400 bis 650°C beträgt, abgekühlt werden. Nach dem Wärmeaustausch gibt man zu den abgekühlten Verbrennungsgasen nochmals als Zuschläge a), b) und c) und zusätzlich als Komponente d) Natriumbicarbonat hinzu. Diese Menge an d) beträgt etwa 10 bis 30 Gew.-Teile auf 1000 Gew.-Teile eingesetzte Kohle. Hierfür ist also die Mischung aus a), b) und c) geeignet, wobei jedoch die Festsubstanz aus der Rübenreinigung, also die Komponente ii, entfällt.

Schließlich werden die Abgase dann in üblicher Weise einem Trockenfilter zugeführt.

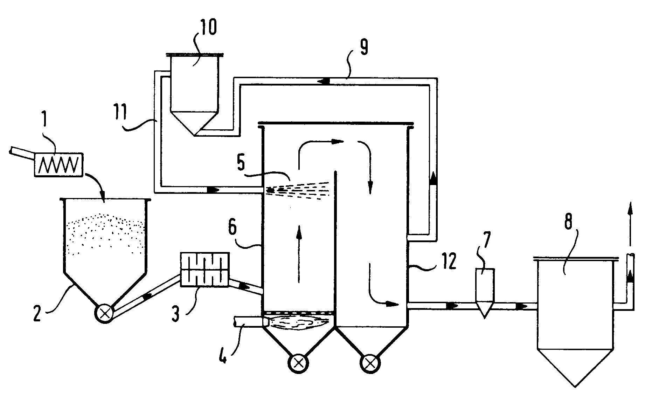

Die Figur stellt eine schematische Zeichnung einer für das erfindungsgemäße Verfahren geeigneten Verbrennungsanlage dar:
Dabei bedeutet (1) einen Mischer, in welchem die Kohle mit den Zusatzstoffen gemäß a) und b) sowie dem Ton abgemischt wird. Von diesem Mischer gelangt die Kohle in ein Brennstoffzwischenlager 2. Sie wird von dort zu einer Mühle 3 gefördert, in welcher eine Zerkleinerung der Mischung auf eine Korngröße von 25 bis 500 µm erfolgt. Von der Mühle wird das nunmehr zerkleinerte Brennstoffgemisch auf den Rost einer Kesselanlage gegeben, die mit einem Brenner 4 ausgerüstet ist. Die Kohle verbrennt auf dem Rost oberhalb des Brenners 4 und gelangt über die Rauchgasebene 5 in einen Wärmetauscher. In dem Wärmetauscher findet durch die Leitung 9 eine Rauchgasrückführung zu einem Additiv-Wirbeltopf 10 statt, in welchem die Zuschlage a), b) und c) zusammen mit 10 bis 25 Vol.% rückgeführtem Verbrennungsgas dann in die obere Verbrennungszone 5 eingeblasen werden. Die heißen Gase verlassen am unteren Ende des Wärmeaustauschers durch die Leitung 12 die Verbrennungsanlage. 7 bedeutet eine Zugabevorrichtung für die Additive a), b) und c) sowie von d) Natriumbicarbonat zu dem nach Wärmeaustausch abgekühlten Verbrennungsgas, und 8 bedeutet ein Trockenfilter, z.B. ein Tuchfilter. Das nunmehr gereinigte Gas wird hinter dem Trockenfilter an die Atmosphäre abgegeben.

## Patentansprüche

1. Verfahren zum Vermindern der Schadstoffemissionen beim Betrieb von Kohleverbrennungseinrichtungen, bei dem man vor der Verbrennung der Kohle folgende Substanzen zuführt:
a) Spezialkalk T, enthaltend Calciumcarbonat und hexagonalen Kohlenstoff sowie
b) Rückstandsprodukte aus der Zuckerindustrie, ausgewählt aus
i) syrupartiger Melasse und/oder
ii) Festsubstanz aus der Rübenreinigung und/oder
iii) Carboschlamm aus der Zuckerfertigung,
und die Mischung aus der Kohle und den Zusatzstoffen gemäß a) und b) verbrennt, dadurch **gekennzeichnet,** daß man in Kombination folgende Verfahrensschritte durchführt:
A. Mischen der Kohle mit den Zusatzstoffen gemäß a) und b) unter Zusatz von
c) Ton;
B. gegebenenfalls Bunkern der gemäß A erhaltenen Mischung mit einem Feuchtigkeitsgehalt von 10 bis 25%;
C. Mahlen der Mischung gemäß A auf eine Korngröße von 25 bis 500 µm;
D. Einblasen oder Fördern der gemäß C erhaltenen Mischung in einen unteren Feuerungsraum eines Verbrennungsofens;
E. Einblasen der Zuschläge aus a), b) und c) zusammen mit 10 bis 25 Volumen-% rückgeführtem Verbrennungsgas in die obere Verbrennungszone des Verbrennungsofens (Flammzone);
F. Zugabe des Additivs aus a), b) und c), jedoch ohne die Komponente ii), und von d) Natriumbicarbonat zu dem nach Wärmeaustausch abgekühlten Verbrennungsgas; und
G. Leiten des Verbrennungsgases über ein Trockenfilter.

2. Verfahren gemäß Anspruch 1, dadurch **gekennzeichnet,** daß die Komponente a) (Spezialkalk T, enthaltend Calciumcarbonat und hexagonalen Kohlenstoff) in einer solchen Menge zugemischt wird, daß sie für eine 2-bis 3-fache stöchiometrische Umsetzung mit den bei der Verbrennung der Kohle entstehenden Schadstoffen in der Kohle ausreicht.

3. Verfahren gemäß einem der vorhergehenden Ansprüche, dadurch **gekennzeichnet,** daß das Verhältnis der Komponenten a), b) und c) zueinander
a) 30 bis 60 Gew.%,
b) 40 bis 70 Gew.% und
c) 5 bis 20 Gew.%
beträgt.

4. Verfahren gemäß Anspruch 1, dadurch **gekennzeichnet,** daß auf 1000 Gew.-Teile Kohle
von a) 20 bis 60 Gew.-Teile,
von b) 20 bis 60 Gew.-Teile,
von c) 5 bis 25 Gew.-Teile und
von d) 10 bis 30 Gew.-Teile
angewendet werden.

5. Verfahren gemäß Anspruch 1, dadurch **gekennzeichnet,** daß man die Mischung A auf eine Korngröße von 100 bis 200 µm mahlt.

6. Verfahren gemäß Anspruch 1, dadurch **gekennzeichnet,** daß die Verbrennungstemperatur in dem unteren Feuerungsraum 850 bis 1150°C beträgt.

7. Verfahren gemäß Anspruch 1, dadurch **gekennzeichnet,** daß in der Stufe E 10 bis 15 Volumen-% Verbrennungsgas in die obere Verbrennungszone des Verbrennungsofens zurückgeführt werden.

## Claims

1. Method for reducing pollutant emissions during operation of coal burning installations, in which the following substances are supplied before burning the coal:
a) special lime T, containing calcium carbonate and hexagonal carbon as well as
b) residue products from the sugar industry, selected from
i) syrup-like molasses and/or
ii) solid matter from beet cleaning and/or
iii) carbosludge from sugar production,
and the mixture of the coal and the additives according to a) and b) is burnt, characterised in that the following steps are performed in combination:
A. mixing the coal with the additives according to a) and b) with the addition of
c) clay;
B) if occasion arises, bunkering the mixture obtained according to A with a moisture content of 10 to 25%;
C. grinding the mixture according to A to a particle size of 25 to 500 µm;
D. injecting or conveying the mixture obtained according to C into a lower firing chamber of a combustion furnace;
E. injecting the additives from a), b) and c) together with 10 to 25 volume % recycled combustion gas into the upper combustion zone of the combustion furnace (flame zone);
F. adding the additive consisting of a), b) and c), but without component ii), and d) sodium bicarbonate to the combustion gas which has been cooled down after heat exchange; and
G. conducting the combustion gas over a dry filter.

2. Method according to claim 1, characterised in that component a) (special lime T, containing calcium carbonate and hexagonal carbon) is added in such a quantity that it is sufficient for stoichiometric reaction two to three times with the pollutants in the coal which arise during combustion of the coal.

3. Method according to any of the preceding claims, characterised in that the ratio of components a), b) and c) to each other is
a) 30 to 60 wt.%,
b) 40 to 70 wt.% and
c) 5 to 20 wt.%.

4. Method according to claim 1, characterised in that to 1000 parts by weight of coal there are used
of a) 20 to 60 parts by weight,
of b) 20 to 60 parts by weight,
of c) 5 to 25 parts by weight and
of d) 10 to 30 parts by weight.

5. Method according to claim 1, characterised in that the mixture A is ground to a particle size of 100 to 200 µm.

6. Method according to claim 1, characterised in that the combustion temperature in the lower firing chamber is 850 to 1150°C.

7. Method according to claim 1, characterised in that in stage E 10 to 15 volume % combustion gas is returned to the upper combustion zone of the combustion furnace.

## Revendications

1. Procédé pour réduire les émissions de substances nocives lors du fonctionnement des installations de combustion du charbon, dans lequel on apporte avant la combustion du charbon les substances suivantes :
a) de la chaux spéciale T, contenant du carbonate de calcium et du carbone hexagonal; et
b) des produits résiduels de l'industrie sucrière choisis parmi :
i) une mélasse sirupeuse et/ou
ii) la substance solide provenant du nettoyage des betteraves, et/ou
iii) la boue carbonée de la fabrication du sucre,
et on brûle le mélange de charbon et des additifs selon (a) et b), caractérisé en ce qu'on effectue en combinaison les stades de procédé suivants :
A. Mélange du charbon avec les additifs selon a) et b) avec addition de :
c) argile;
B. Mise en soute du mélange obtenu conformément à A ayant une teneur en humidité de 10 à 25 %;
C. Broyage du mélange selon A à une granularité de 25 à 500 µm;
D. Insufflation ou transport du mélange obtenu conformément à C dans le foyer inférieur d'un four de combustion;
E. Insufflation des additifs de a), b) et c), en même temps que 10 à 25 volumes % de gaz de combustion recyclé dans la zone de combustion supérieure du four de combustion (zone de flamme);
F. Addition de l'additif de a), b) et c), mais sans le constituant ii), et de d) du bicarbonate de sodium au gaz de combustion refroidi après l'échange de chaleur; et
G. Envoi du gaz de combustion sur un filtre sec.

2. Procédé selon la revendication 1, caractérisé en ce que le constituant a) (chaux spéciale T, contenant du carbonate de calcium et du carbone hexagonal) est ajouté au charbon dans une quantité telle qu'elle représente 2 à 3 fois la quantité stoechiométrique suffisant pour la réaction avec les substances nuisibles apparaissant lors de la combustion du charbon.

3. Procédé selon l'une des revendications précédentes, caractérisé en ce que le rapport des constituants a), b) et c) les uns par rapport aux autres est :
de 30 à 60 % en poids pour a),
de 40 à 70 % en poids pour b), et
de 5 à 20 % en poids pour c).

4. Procédé selon la revendication 1, caractérisé en ce qu'on utilise pour 100 parties en poids de charbon,
20 à 60 parties en poids de a)
20 à 60 parties en poids de b)
5 à 25 parties en poids de c) et
10 à 30 parties en poids de d).

5. Procédé selon la revendication 1, caractérisé en ce qu'on broie le mélange A à une granularité de 100 à 200 µm.

6. Procédé selon la revendication 1, caractérisé en ce que la température de combustion dans le foyer inférieur est de 850 à 1150°C.

7. Procédé selon la revendication 1, caractérisé en ce que dans le stade E, on recycle 10 à 15 volumes % de gaz de combustion dans la zone de combustion supérieure du four de combustion.
